(19) Europäisches Patentamt
European Patent Office
Office européen des brevets

(11) EP 1 146 522 A1

(12) **EUROPEAN PATENT APPLICATION**
published in accordance with Art. 158(3) EPC

(43) Date of publication:
**17.10.2001 Bulletin 2001/42**

(21) Application number: **99951096.9**

(22) Date of filing: **27.10.1999**

(51) Int Cl.[7]: **H01B 3/56**

(86) International application number:
**PCT/JP99/05942**

(87) International publication number:
**WO 00/28555 (18.05.2000 Gazette 2000/20)**

(84) Designated Contracting States:
**AT BE CH CY DE DK ES FI FR GB GR IE IT LI LU MC NL PT SE**

(30) Priority: **06.11.1998 JP 31563698**

(71) Applicant: **Hitachi, Ltd.**
**Chiyoda-ku, Tokyo 101-8010 (JP)**

(72) Inventors:
- **OROOKA, Hisashi, Hitachi Research Laboratory Hitachi-shi, Ibaraki 319-1292 (JP)**
- **ITO, Yuzo, Hitachi Research Laboratory Hitachi-shi, Ibaraki 319-1292 (JP)**
- **SHIRONE, Takashi, Power & Industrial Systems R & D Hitachi-shi, Ibaraki 319-1221 (JP)**
- **SAITO, Sadamu, Power & Industrial Systems R & D Hitachi-shi, Ibaraki 319-1221 (JP)**

(74) Representative: **Strehl Schübel-Hopf & Partner**
**Maximilianstrasse 54**
**80538 München (DE)**

# (54) TRANSMISSION/DISTRIBUTION APPARATUS

(57) To provide electric power transmitting and distributing machines and equipment which have high performance and a very little effect on global warming, by using an insulating medium which has a high dielectric breakdown strength, flame retardance or incombustibility, and a very small global warming factor. The insulating medium is sealed in the bus 2, bus breaker 4, connecting bus 5 and 7, current transformer 9 and 10, breaker 8, connecting bus 13, 16, and 18, voltage transformer 17, and lightning guard 19, and they are partitioned by the insulating spacer 20. The insulating medium is a compound represented $C_xH_yF_zI$ or $C_aH_bF_cI$ (where y + z = 2x + 1, z > y, x is a natural number of 6 or less, Z is a natural number, y is 0 or a natural number, b + c = 2a, c > b, a is a natural number from 3 to 6, c is a natural number, and b is 0 or a natural number.)

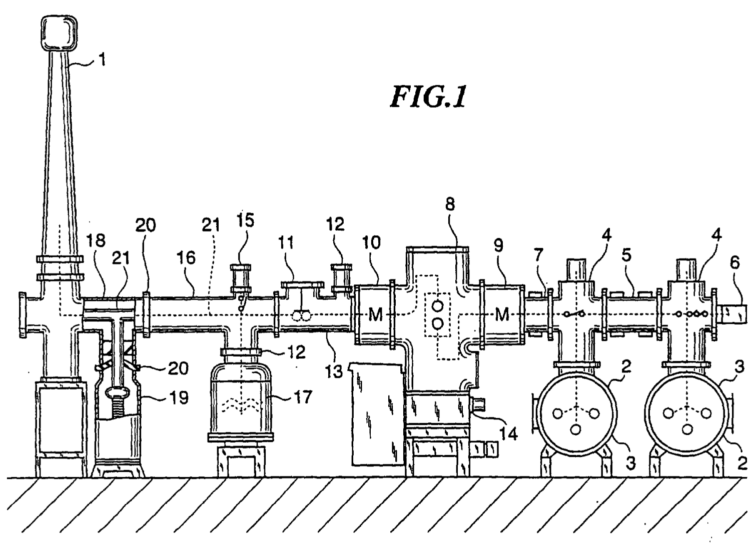


*FIG.1*

EP 1 146 522 A1

## Description

BACKGROUND OF THE INVENTION

1.Field of the Invention

The present invention relates to electric power transmitting and distributing machines and equipment.

2.Description of the Prior Art

Global warming occurs as some compound released from the ground surface into the atmosphere absorbs infrared rays emitted by black-body radiation, thereby heating the atmosphere and raising the air temperature. The value of the air temperature which has been raised is expressed in terms of the relative value with the air temperature which has been raised in the case where CFC11 and carbon dioxide have been released into the atmosphere. The global warming factor (GWP) is usually expressed in terms of the ratio of the product of the temperature rise of the atmosphere in the case where some compound has diffused uniformly in a concentration of 1 ppb (vol) into the atmosphere and the life of the compound in the atmosphere to the product of the temperature rise of the atmosphere in the case where carbon dioxide has diffused in the similar way and the life of carbon dioxide in the atmosphere.

Recently, flame retardance and incombustibility are required of electric power transmitting and distributing machines and equipment from the standpoint of disaster prevention. Incombustible transformers or the like have come into use which employ, as an insulating or cooling medium, $SF_6$ or perfluoro carbon (PFC) fluid, which has a high dielectric breakdown strength and is incombustible and chemically stable. However, $SF_6$ and PFC have a much greater global warming factor as compared with carbon dioxide. Therefore, when these compounds are released into the atmosphere, the temperature rise on the ground surface due to greenhouse effect or the global warming takes place, posing a global environmental problem. $SF_6$ and PFC have been regulated already, and it is considered that the regulation of their emission will be enforced in the future. Since it is practically difficult to manufacture electric power transmitting and distributing machines and equipment without releasing $SF_6$ and PFC at all into the atmosphere, there is necessity for electric power transmitting and distributing machines and equipment which employ, in place of $SF_6$ and PFC, an insulating medium and cooling medium which have a high dielectric breakdown strength, flame retardance or incombustibility, and a low global warming factor.

Japanese Patent Laid-open No. 59612/1997 discloses the use of $CFI_3$ as a refrigerant for freezing cycle units.

In general, a gas increases in dielectric breakdown strength with increasing molecular weight. And, compounds containing chlorine atoms or bromine atoms are flame-retardant or incombustible. If chlorine atoms or bromine atoms are introduced into the molecule in order to obtain a flame-retardant or incombustible compound, the resulting compound has a high ozone-destroying factor. It is known that among compounds containing fluorine, chlorine, or bromine in the molecule, those which are chemically stable, flame retardant, and difficult to decompose have a long life in the atmosphere and a great global warming factor.

For this reason, it is very difficult to design the molecule of the insulating medium which has a high dielectric breakdown strength, flame retardance or incombustibility, and a low global warming factor, and hence can be used as a substitute for $SF_6$ and PFC.

Japanese Patent Laid-open No. 59612/1997 discloses the use of $CF_3I$ as a refrigerant for freezing cycle units; however, it discloses nothing about its dielectric breakdown strength.

The dielectric insulating properties required of $CF_3I$ as a refrigerant for freezing cycle units is dielectric insulating properties of such degree that partial discharge and dielectric breakdown do not occur in the coil etc. in a motor installed in a compressor, and such dielectric breakdown strength as required of the insulating medium for electric power transmitting and distributing machines and equipment has never been considered.

SUMMARY OF THE INVENTION

The inventors of the present invention investigated the dielectric breakdown strength of $CF_3I$ and found that $CF_3I$ can be used as an insulating medium for electric power transmitting and distributing machines and equipment, and invented electric power transmitting and distributing machines and equipment which employ $CF_3I$ as an insulating medium.

The object of the present invention is to provide electric power transmitting and distributing machines and equipment which employ an insulating medium having a high dielectric breakdown strength, flame retardance or incombustibility, and an extremely small global warming factor, which have high performance, and which produce very little effect on global warming.

The feature of the present invention to achieve the aforesaid object resides in that the insulating medium

contained in electric power transmitting and distributing machines and equipment, such as transformers, reactors, buses, GIS's, breakers, and switches, contain a compound represented by the formula (1) or (2) below

$$C_xH_yF_zI \qquad (1)$$

(where y + z = 2x + 1, z > y, x is a natural number of 6 or less, Z is a natural number, and y is 0 or a natural number.)

$$C_aH_bF_cI \qquad (2)$$

(where $C_aH_bF_cI$ is a cyclic compound, b + c = 2a, c > b, a is a natural number from 3 to 6, c is a natural number, and b is 0 or a natural number.)

The compounds represented by the formula (1) include, for example, $CF_3CHFCF_2I$ and $CH_2CF_2CF_2I$. And the compounds represented by the formula (2) include, for example, cyclic compounds such as

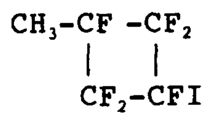

$(CH_3\text{-}c\text{-}C_4F_6I)$

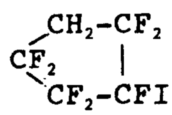

$(c\text{-}C_5H_2F_7I)$

The compound represented by the formula (1) or (2) contains iodine in the molecule and has a high molecular weight; therefore, the dielectric strength of the gas is high. In addition, containing iodine in the molecule, it is readily decomposed by light and has a short life in the atmosphere. Consequently, the compound represented by the formula (1) or (2) has an extremely small global warming factor and an ozone destroying factor which is almost negligible. Moreover, these compounds have more than half of hydrogen in the hydrocarbon replaced by fluorine and iodine and hence are flame retardant.

Therefore, owing to this feature, since the insulating medium containing the compound represented by the formula (1) or (2) with the above-mentioned properties is used, it is possible to obtain electric power transmitting and distributing machines and equipment which have high performance, flame retardance, and very little effect on global warming.

Also, the insulating medium may contain the compound represented by the formula (3) of (4) below.

$$C_xF_{(2x+1)}I \qquad (3)$$

(where x is a natural number of 6 or less.)

$$C_aF_{2a}I \qquad (4)$$

(where $C_aF_{2a}I$ is a cyclic compound and a is a natural number from 3 to 6.)

The compounds of the formula (3) and the formula (4) are those compounds corresponding respectively to the compound of the formula (1) with y = 0 and the compound of the formula (2) with b = 0. The compounds represented by the formula (3) include, for example, $CF_3I$, $CF_3CF_2I$, and $CF_3CF_2CF_2I$. And the compounds represented by the formula (4) include, for example, cyclic compounds such as

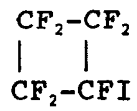

$(c\text{-}C_4F_7I)$

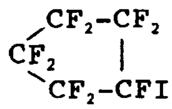

$(c\text{-}C_5F_3I)$

These compounds have all hydrogens in the hydrocarbon replaced by fluorine and iodine, and if x or a is equal, since the molecular weight is larger than the compound represented by the formula (1) and the formula (2), then the dielectric strength of the gas is high and it is flame retardant or incombustible.

Therefore, even though the compound represented by the formula (3) and the formula (4) is used, it is possible to obtain electric power transmitting and distributing machines and equipment which have high performance, flame retardance or incombustibility, and a very little effect on global warming. Moreover, since such compounds as $CF_3I$, $CF_3CF_2I$, and $CF_3CF_2CF_2I$ are easily extinguishable, it is possible to impart self-extinguishing characteristics to electric power transmitting and distributing machines and equipment.

Also, it is possible to use an insulting medium which is a mixture of the compound represented by the formulas (1) to (4) and nitrogen or helium for electric power transmitting and distributing machines and equipment.

According to the present invention, since an insulating compound 23 is used which contains a compound represented by the formula (1) or the formula (2) which has a high dielectric strength of the gas because it contains iodine in the molecule, is flame-retardant and incombustible, and has an extremely small global warming factor and a negligibly small ozone destroying factor, it is possible to obtain high-performance electric power transmitting and distributing machines and equipment having a very little effect on global warming.

And, if x and a are equal, then the compound represented by the formula (3) and the formula (4) has a higher dielectric strength of gas than the compound represented by the formula (1) and the formula (2). By using the insulating medium containing the compound represented by the formula (3) and the formula (4), it is possible to obtain electric power transmitting and distributing machines and equipment which have a very little effect on global warming.

BRIEF DESCRIPTION OF THE DRAWINGS

Fig. 1 is a diagram showing a gas-insulated switchgear in the first example.
Fig. 2 is a diagram showing a bus in the second example.
Fig. 3 is a diagram showing a breaker in the third example.
Fig. 4 is a diagram showing a gas-insulated transformer in the fourth example.
Fig. 5 is a diagram showing the structure of the electrode used for measurement of AC breakdown voltage.
Fig. 6 is a graph showing the change of AC breakdown voltage of $CF_3I$ against pressure.
Fig. 7 is a graph showing the change of AC breakdown voltage of a mixture of $CF_3I$ and nitrogen against pressure.

DESCRIPTION OF THE PREFERRED EMBODIMENTS

First, a mention will be made of the insulating medium used for the electric power transmitting and distributing machines and equipment according to the present invention. Table 1 shows the insulating medium ($CF_3I$, $CF_3CF_2I$, $CF_3CF_2CF_2I$, $CF_3CF_2CF_2CF_2I$, $CF_3CF(CF_3)CF(CF_3)CF_2I$, $c\text{-}C_4F_7I$, $c\text{-}C_5F_9I$, $c\text{-}C_6F_{11}I$, $CF_3\text{-}c\text{-}C_4F_6I$, $CF_3CHFCF_2I$, $CF_3CHFCF(CF_2CF_3)CF_2I$, $CH_3CF_2CF_2I$, $CH_3CF(CF_3)CF(CF_3)CF_2I$, $CH_3\text{-}c\text{-}C_4F_6I$, $c\text{-}C_5H_2F_7I$, $c\text{-}C_8H_2F_8I$, and $CF_3\text{-}c\text{-}C_4H_2F_4I$) and their molecular weight, used for the electric power transmitting and distributing machines and equipment according to the present invention. Since they contain iodine and have a high molecular weight, the dielectric strength of the gas is high. In addition, sine they contain iodine in the molecule, they are readily decomposed by light and have a short life in the atmosphere. Therefore, their global warming factor is extremely small, and their ozone breaking factor is almost negligible. Moreover, these compounds have more than half of hydrogens in the hydrocarbon replaced by fluorine and iodine and are flame retardant.

TABLE 1

| CHEMICAL FORMULA | MOLECULAR WEIGHT | CHEMICAL FORMULA | MOLECULAR WEIGHT |
|---|---|---|---|
| $CF_3I$ | 196 | $CF_3CHFCF_2I$ | 278 |
| $CF_3CF_2I$ | 246 | $CF_3CHFCF(CF_2CF_3)CF_2I$ | 428 |
| $CF_3CF_2CF_2I$ | 296 | $CH_3CF_2CF_2I$ | 242 |
| $CF_3CF_2CF_2CF_2I$ | 346 | $CH_3CF(CF_3)CF(CF_3)CF_2I$ | 392 |
| $CF_3CF(CF_3)CF(CF_3)CF_2I$ | 446 | | |
| 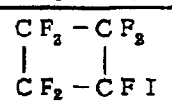 $(c-C_4F_7I)$ | 308 | 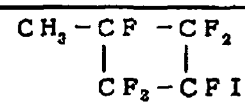 $(CH_3-c-C_4F_6I)$ | 304 |
| 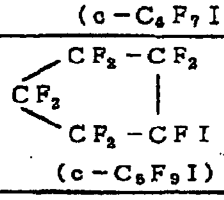 $(c-C_5F_9I)$ | 358 | 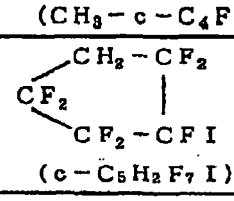 $(c-C_5H_2F_7I)$ | 322 |
| 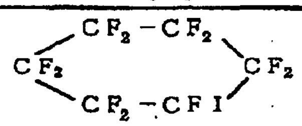 $(c-C_6F_{11}I)$ | 408 | 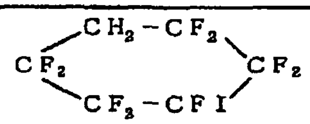 $(c-C_6H_2F_9I)$ | 372 |
| 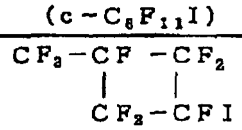 $(CF_3-c-C_4F_5I)$ | 358 | 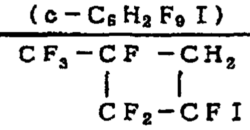 $(CF_3-c-C_4H_2F_4I)$ | 322 |

For these insulating media, the AC breakdown voltage was measured. The AC breakdown voltage was measured, with the insulating medium sealed in a pressure vessel in which spherical electrodes (12.5 mm in diameter) made of SUS (as shown in Fig. 5) are arranged at an interval of 1 mm, with a voltage applied across the spherical electrodes at a voltage rising rate of 0.5 $kV_{rms}$.

Table 2 shows the AC breakdown voltage of $CF_3I$, $CF_3CF_2I$, $CF_3CF_2CF_2I$, $CF_3CF_2CF_2CF_2I$, $CF_3CF(CF_3)CF(CF_3)CF_2I$, $c-C_4F_7I$, $c-C_5F_9I$, $c-C_6F_{11}I$, $CF_3-c-C_4F_6I$, $CF_3CHFCF_2I$, $CF_3CHFCF(CF_2CF_3)CF_2I$, $CH_3CF_2CF_2I$, $CH_3CF(CF_3)CF(CF_3)CF_2I$, $CH_3-c-C_4F_6I$, $c-C_5H_2F_7I$, $c-C_8H_2F_8I$, and $CF_3-c-C_4H_2F_4I$, and the breakdown voltage of mixed media of each of them and nitrogen or helium. Each AC breakdown voltage was measured at temperatures and pressures shown in Table 2. Their AC breakdown voltage is about 7～17 kV; therefore, these insulating media and mixed media can be used as a substitute for $SF_6$ and PFC for electric power transmitting and distributing machines and equipment (such as transformers, reactors, buses, GIS's, breakers, and switches) in which $SF_6$ is used.

TABLE 2

| COMPOSITION (Vol.%) | | | STEALING TEMPERATURE (°C) | GAS PRESSUER (MP a) | AC BREAKDOWN VOLTACE (kV) |
|---|---|---|---|---|---|
| $CF_3I$ | 100% | | 20 | 0.1 | 7.8 |
| $CF_3I$ | 33.3% : $N_2$ | 66.7% | 20 | 0.3 | 13.9 |
| $CF_3I$ | 25% : $N_2$ | 75% | 20 | 0.4 | 16.5 |

TABLE 2 (continued)

| COMPOSITION (Vol.%) | | | STEALING TEMPERATURE (°C) | GAS PRESSUER (MP a) | AC BREAKDOWN VOLTACE (kV) |
|---|---|---|---|---|---|
| $CF_3I$ | 33.3% : He | 66.7% | 20 | 0.3 | 7.4 |
| $CF_3I$ | 25% : He | 75% | 20 | 0.4 | 8.2 |
| $CF_3CF_2I$ | 100% | | 40 | 0.1 | 8.8 |
| $CF_3CF_2I$ | 33.3% : $N_2$ | 66.7% | 40 | 0.3 | 14.6 |
| $CF_3CF_2I$ | 25% : $N_2$ | 75% | 40 | 0.4 | 18.3 |
| $CF_3CF_2CF_2I$ | 100% | | 70 | 0.1 | 9.5 |
| $CF_3CF_2CF_2I$ | 33.3% : $N_2$ | 66.7% | 70 | 0.3 | 14.5 |
| $CP_3CF_2CF_2I$ | 25% : $N_2$ | 75% | 70 | 0.4 | 16.0 |
| $CF_3CF_2CF_2CF_2I$ | 100% | | 80 | 0.1 | 10.8 |
| $CF_3CF_2CF_2CF_2I$ | 33.3% : $N_2$ | 66.7% | 80 | 0.3 | 15.3 |
| $CF_3CF(CF_3)CF(CF_3)CF_2I$ | 100%: | | 90 | 0.1 | 14.4 |
| $CF_3CF(CF_3)CF(CF_3)CF_2I$ | 33.3% : $N_2$ | 88.7% | 90 | 0.3 | 17.3 |
| c-$C_4F_7I$ | 100% | | 80 | 0.1 | 9.8 |
| c-$C_4F_7I$ | 33.3% : $N_2$ | 66.7% | 80 | 0.3 | 14.5 |
| c-$C_4F_7I$ | 25% : $N_2$ | 75% | 80 | 0.4 | 15.8 |
| c-$C_5F_8I$ | 100% | | 80 | 0.1 | 11.5 |
| c-$C_5F_8I$ | 33.3% : $N_2$ | 66.7% | 90 | 0.3 | 15.2 |
| c-$C_8F_{11}I$ | 100% | | 100 | 0.1 | 12.1 |
| c-$C_8F_{11}I$ | 33.3% : $N_2$ | 66.7% | 100 | 0.3 | 16.4 |
| $CF_3$-c-$C_4F_6I$ | 100% | | 90 | 0.1 | 12.2 |
| $CF_3$-c-$C_4F_6I$ | 33.3% : $N_2$ | 66.7% | 90 | 0.3 | 16.0 |
| $CF_3CHFCF_2I$ | 100% | | 80 | 0.1 | 8.7 |
| $CF_3CHFCF_2I$ | 33.3% : $N_2$ | 86.7% | 80 | 0.3 | 13.7 |
| $CF_3CHFCF(CF_2CF_3)CF_2I$ | 100% | | 80 | 0.1 | 13.8 |
| $CF_3CHFCF(CF_2CF_3)CF_2I$ | 33.3% : $N_2$ | 66.7% | 90 | 0.3 | 16.8 |
| $CH_3CF_2CF_2I$ | 100% | | 80 | 0.1 | 7.7 |
| $CH_3CF_2CF_2I$ | 33.3% : $N_2$ | 66.7% | 80 | 0.3 | 12.9 |
| $CH_3CF(CF_3)CF(CF_3)CF_3$ I | 100% | | 90 | 0.1 | 12.6 |
| $CH_3CF(CF_3)CF(CF_2)CF_2$ I | 33.3% : $N_2$ | 66.7% | 90 | 0.3 | 16.3 |
| $CH_3$-c-$C_4F_8I$ | 100% | | 80 | 0.1 | 9.1 |
| $CHH_3$-c-$C_4F_6I$ | 33.3% : $N_2$ | 66.7% | 80 | 0.3 | 14.0 |
| c-$C_8H_2F_7I$ | 100% | | 80 | 0.1 | 10.2 |

TABLE 2 (continued)

| COMPOSITION (Vol.%) | | | STEALING TEMPERATURE (°C) | GAS PRESSUER (MP a) | AC BREAKDOWN VOLTACE (kV) |
|---|---|---|---|---|---|
| c-$C_5H_2F_7I$ | 33.3% : $N_2$ | 66.7% | 80 | 0.3 | 14.8 |
| c-$C_8H_2F_9I$ | 100% | | 90 | 0.1 | 11.8 |
| c-$C_8H_2F_9I$ | 33.3% : $N_2$ | 66.7% | 90 | 0.3 | 15.9 |
| $CF_3$-c-$C_4H_2F_4$ I | 100% | | 90 | 0.1 | 9.8 |
| $CF_3$-c-$C_6H_2F_4I$ | 33.3% : $N_2$ | 66.7% | 90 | 0.3 | 14.5 |

Of the insulating media and mixed media shown in Table 2, $CF_3I$ will be described in more detail. Fig. 6 shows the AC breakdown voltage of $CF_3I$. For comparison, the AC breakdown voltage of $SF_6$ is also shown. The AC breakdown voltage of $CF_3I$ is superior to the AC breakdown voltage of $SF_6$ in the range of gas pressure 0.1~0.2 MPa. Therefore, $CF_3I$ can be applied, as a substitute for $SF_6$, to electric power transmitting and distributing machines and equipment in which $SF_6$ is used.

Next, the AC breakdown voltage was measured when $CF_3I$ was mixed with nitrogen (in the case where the partial pressure of $CF_3I$ at 20°C is 0.1 MPa and 0.2 MPa). Fig. 7 shows the AC breakdown voltage of a mixture of $CF_3I$ and nitrogen. For comparison, the AC breakdown voltage of $SF_6$ is also shown. The AC breakdown voltage of the mixed medium of $CF_3I$ and nitrogen is slightly smaller than the AC breakdown voltage of $SF_6$ but is higher than 10 $kV_{rms}$ in the range of gas pressure of 0.2~0.5 MPa.

In the case where $CF_3I$ is used by mixing with other compounds, nitrogen is desirable because it has a high dielectric breakdown strength, flame retardance, and a global warming factor of 0. It is also possible to obtain media having a high dielectric breakdown strength by also using rare gases, such as helium, neon, argon, and xenon, or carbon dioxide and other general-purpose compounds. Therefore, regarding the mixed medium of $CF_3I$ and nitrogen and the mixed medium of $CF_3I$ and helium, it is possible to apply as a substitute of $SF_6$ for electric power transmitting and distributing machines and equipment in which $SF_6$ is used.

Also, the insulating media shown in Table 1 ($CF_3I$, $CF_3CF_2I$, $CF_3CF_2CF_2I$, $CF_3CF_2CF_2CF_2I$, $CF_3CF(CF_3)CF(CF_3)CF_2I$, c-$C_4F_7I$, c-$C_5F_9I$, c-$C_6F_{11}I$, $CF_3$-c-$C_4F_6I$, $CF_3CHFCF_2I$, $CF_3CHFCF(CF_2CF_3)CF_2I$, $CH_3CF_2CF_2I$, $CH_3CF(CF_3)CF(CF_3)CF_2I$, $CH_3$-c-$C_4F_6I$, c-$C_5H_2F_7I$, c-$C_8H_2F_8I$, and $CF_3$-c-$C_4H_2F_4I$) contain fluorine and iodine in the molecule and hence has a small intermolecular mutual action. Therefore, the boiling point is low as compared with hydrocarbon compounds of the same molecular weight. These compounds can be used either in the form of gas or in the form of liquid, by adjusting the temperature at which they are used and the pressure in the vessel.

Since $CF_3I$ has a boiling point of -22.5°C, it can be used in the form of gas at normal temperature (30°C) and it can also be used in the liquefied form under high pressure. Also, $CF_3CF_2I$, which has a boiling point of 12°C, and $CF_3CF_2CF_2I$, which has a boiling point of 41°C, can be used either in the form of gas or in the form of liquid under atmospheric pressure if the temperature is adjusted; it can also be used in the liquefied form under high pressure.

Also, $SF_6$, $C_2F_6$, octafluorobutane (c-$C_4F_8$), etc. have a high global warming factor; but it is possible to reduce the amount of use of these compounds by mixing with the insulating media in Table 2 or their mixed media.

(Embodiment 1)

An explanation will be given of the gas-insulated switchgear as the first example of the present invention. Fig. 1 shows the gas-insulated switchgear of this example. The gas-insulated switchgear of this example has, along a bus conductor 21 which is the main current passage, a bushing 1, a connecting bus 18, a lightning guard 19 connected to the connecting bus 18, a connecting bus 16, a connecting bust 16 to which an earthing device 15 and a voltage transformer 17 are connected,
a line disconnector 11, a connecting bus 13 equipped with an earthing device 12, a current transformer 9, a breaker 8, a breaker having an operating apparatus 14 at the lower part, a current transformer 9, a connecting bus 7, a bus disconnector 4, a connecting bus 5, an earthing device 6, and a bus disconnector 4 placed on each bus 2. In the tank for the bus 2 is housed a three-phase bus conductor 3.

The bus 2, bus disconnector 4, connecting bus 5 and 7, current transformer 9 and 10, breaker 8, connecting bus 13, 16, and 18, voltage transformer 17, and lightning guard 19 are filled with the insulating media shown in Table 2 or their mixed media as the insulating medium 23 ($CF_3I$, $CF_3CF_2I$, $CF_3CF_2CF_2I$, $CF_3CF_2CF_2CF_2I$, $CF_3CF(CF_3)CF(CF_3)CF_2I$, c-$C_4F_7I$, c-$C_5F_9I$, c-$C_6F_{11}I$, $CF_3$-c-$C_4F_6I$, $CF_3CHFCF_2I$, $CF_3CHFCF(CF_2CF_3)CF_2I$, $CH_3CF_2CF_2I$, $CH_3CF$

$(CF_3)CF(CF_3)CF_2I$, $CH_3$-c-$C_4F_6I$, c-$C_5H_2F_7I$, C-$C_8H_2F_8I$, and $CF_3$-c-$C_4H_2F_4I$), and they are partitioned by the insulating spacer 20.

The insulating medium or mixed medium used for the gas-insulated switchgear of this example may be one kind or the kind may be changed according to the machines and equipment.

According to the gas-insulating switchgear of this example, since an insulating compound 23 is used which contains a compound which has a high dielectric strength of the gas because it contains iodine in the molecule, is flame-retardant and incombustible, and has an extremely small global warming factor and a negligibly small ozone destroying factor, the effect on global warming is extremely small and it is possible to open and close the electric power circuit with high performance.

(Embodiment 2)

An explanation will be given of the bus 2 as the second example of the present invention. Fig. 2 shows the bus 2 of this example. In the tank 24 of the bus 2, the insulating medium 23 pervades and the bus conductor 3 is supported by the insulating support 25.

Since, as the insulating medium 23, the insulating media shown in Table 2 or their mixed media ($CF_3I$, $CF_3CF_2I$, $CF_3CF_2CF_2I$, $CF_3CF_2CF_2CF_2I$, $CF_3CF(CF_3)CF(CF_3)CF_2I$, c-$C_4F_7I$, c-$C_5F_9I$, c-$C_6F_{11}I$, $CF_3$-c-$C_4F_6I$, $CF_3CHFCF_2I$, $CF_3CHFCF(CF_2CF_3)CF_2I$, $CH_3CF_2CF_2I$, $CH_3CF(CF_3)CF(CF_3)CF_2I$, $CH_3$-c-$C_4F_6I$, c-$C_5H_2F_7I$, c-$C_8H_2F_8I$, and $CF_3$-c-$C_4H_2F_4I$, or a mixture thereof with nitrogen or helium) were used, it was possible to obtain the high-performance bus 2 as in the case where $SF_6$ was used.

(Embodiment 3)

An explanation will be given of the breaker as the third example of the present invention. Fig. 3 shows a sectional view of the breaker of this example.

In the inside of the breaker, the insulating medium 23 pervades and the breaking part 30 is arranged. The breaking part 30 consists of a fixed buffer piston 31 and a movable buffer cylinder 32. At the end of the buffer cylinder 32 is formed a movable contact 33 which is in contact with a fixed contact 36. At the forward end of the buffer cylinder 32 is formed a gas port 37 and an insulating nozzle 38 is attached. The movable contact 33 is connected to a rod 35 which is driven by a manipulator (not shown). Between the buffer cylinder 32 and the buffer piston 31 is a buffer chamber 34. In the buffer chamber 34, the insulating medium 23 pervades.

At the time of breaking action of the breaking part 30, the rod 35 is pulled off by the manipulator, the buffer cylinder 32 is moved, and the insulating medium 23 in the buffer chamber 34 is compressed. The fixed contact 36 is pulled from the movable contact 33 and also from the insulating nozzle 38. Between the fixed contact 36 and the movable contact 33 occurs an arc accompanied by current breakage. The gas pressure in the buffer chamber 34 at the time of large current breaking is raised further due to heating by the arc plasma that occurs between the opened movable contact 33 and the fixed contact 36.

The pressurized gas in the buffer chamber 34 enters the insulating nozzle 38 through the gas port 37, and then jets out from the forward end of the insulating nozzle 38, thereby extinguishing the arc plasma. After being blown against the arc plasma, the gas becomes a high-temperature gas and is discharged to the fixed side or movable side.

Since, as the insulating medium 23, the insulating media shown in Table 2 or their mixed media ($CF_3I$, $CF_3CF_2I$, $CF_3CF_2CF_2I$, $CF_3CF_2CF_2CF_2I$, $CF_3CF(CF_3)CF(CF_3)CF_2I$, c-$C_4F_7I$, c-$C_5F_9I$, c-$C_6F_{11}I$, $CF_3$-c-$C_4F_6I$, $CF_3CHFCF_2I$, $CF_3CHFCF(CF_2CF_3)CF_2I$, $CH_3CF_2CF_2I$, $CH_3CF(CF_3)CF(CF_3)CF_2I$, $CH_3$-c-$C_4F_6I$, c-$C_5H_2F_7I$, c-$C_8H_2F_8I$, and $CF_3$-c-$C_4H_2F_4I$, or a mixture thereof with nitrogen or helium) were used, it was possible to obtain the high-performance breaker as in the case where $SF_6$ was used.

Moreover, since these insulating media or mixed media are flame-retardant or incombustible and have an extremely small global warming factor and an almost negligibly small ozone breaking factor, it was possible to manufacture the breaker which has very little effect on the global environment.

(Embodiment 4)

An explanation will be given of the gas-insulated transformer as the fourth example of the present invention. Fig. 4 shows the gas-insulated transformer of this example. In the inside of the vessel 41 are held an iron core 42 and a coil 43 together with the insulting medium 23. To the outside of the vessel 41 are connected a cooler 44 and a blower 45 through a cooling pipe 46. The insulating medium 23 is cooled by the cooler 44 as indicated by arrows and then delivered by the blower 45 into the vessel 41 through the cooling pipe underneath, and it enters the iron core 42 and the coil 43 and removes their generated heat and returns again to the cooler 44 through the cooling pipe and flows through the circulating path.

Since, as the insulating medium 23, the insulating media shown in Table 2 or their mixed media ($CF_3I$, $CF_3CF_2I$, $CF_3CF_2CF_2I$, $CF_3CF_2CF_2CF_2I$, $CF_3CF(CF_3)CF(CF_3)CF_2I$, c-$C_4F_7I$, c-$C_5F_9I$, c-$C_6F_{11}I$, $CF_3$-c-$C_4F_6I$, $CF_3CHFCF_2I$, $CF_3CHFCF(CF_2CF_3)CF_2I$, $CH_3CF_2CF_2I$, $CH_3CF(CF_3)CF(CF_3)CF_2I$, $CH_3$-c-$C_4F_6I$, c-$C_5H_2F_7I$, c-$C_5H_2F_8I$, and $CF_3$-c-$C_4H_2F_4I$, or a mixture thereof with nitrogen or helium) were used, it was possible to obtain the high-performance gas-insulated transformer as in the case where $SF_6$ was used.

Moreover, since these insulating media or mixed media are flame-retardant or incombustible and have an extremely small global warming factor and an almost negligibly small ozone breaking factor, it was possible to manufacture the gas-insulated transformer which has a very little effect on the global environment.

## Claims

1. Electric power transmitting and distributing machines and equipment of the type in which an insulating medium is held, wherein said insulating medium contains a compound represented by the formula (1) or (2) below

$$C_xH_yF_zI \qquad (1)$$

(where y + z = 2x + 1, z > y, x is a natural number of 6 or less, Z is a natural number, and y is 0 or a natural number.)

$$C_aH_bF_cI \qquad (2)$$

(where $C_aH_bF_cI$ is a cyclic compound, b + c = 2a, c > b, a is a natural number from 3 to 6, c is a natural number, and b is 0 or a natural number.)

2. Electric power transmitting and distributing machines and equipment of the type in which an insulating medium is held, wherein said insulating medium contains a compound represented by the formula (3) or (4) below

$$C_xF_{(2x+1)}I \qquad (3)$$

(where x is a natural number of 6 or less.)

$$C_aF_{2a}I \qquad (4)$$

(where $C_aF_{2a}I$ is a cyclic compound and a is a natural number from 3 to 6.)

3. Electric power transmitting and distributing machines and equipment of the type in which an insulating medium is held, wherein said insulating medium contains $CF_3I$.

4. The electric power transmitting and distributing machines and equipment as defined in Claim 1, 2, or 3, wherein said insulating medium is a mixture containing nitrogen or helium.

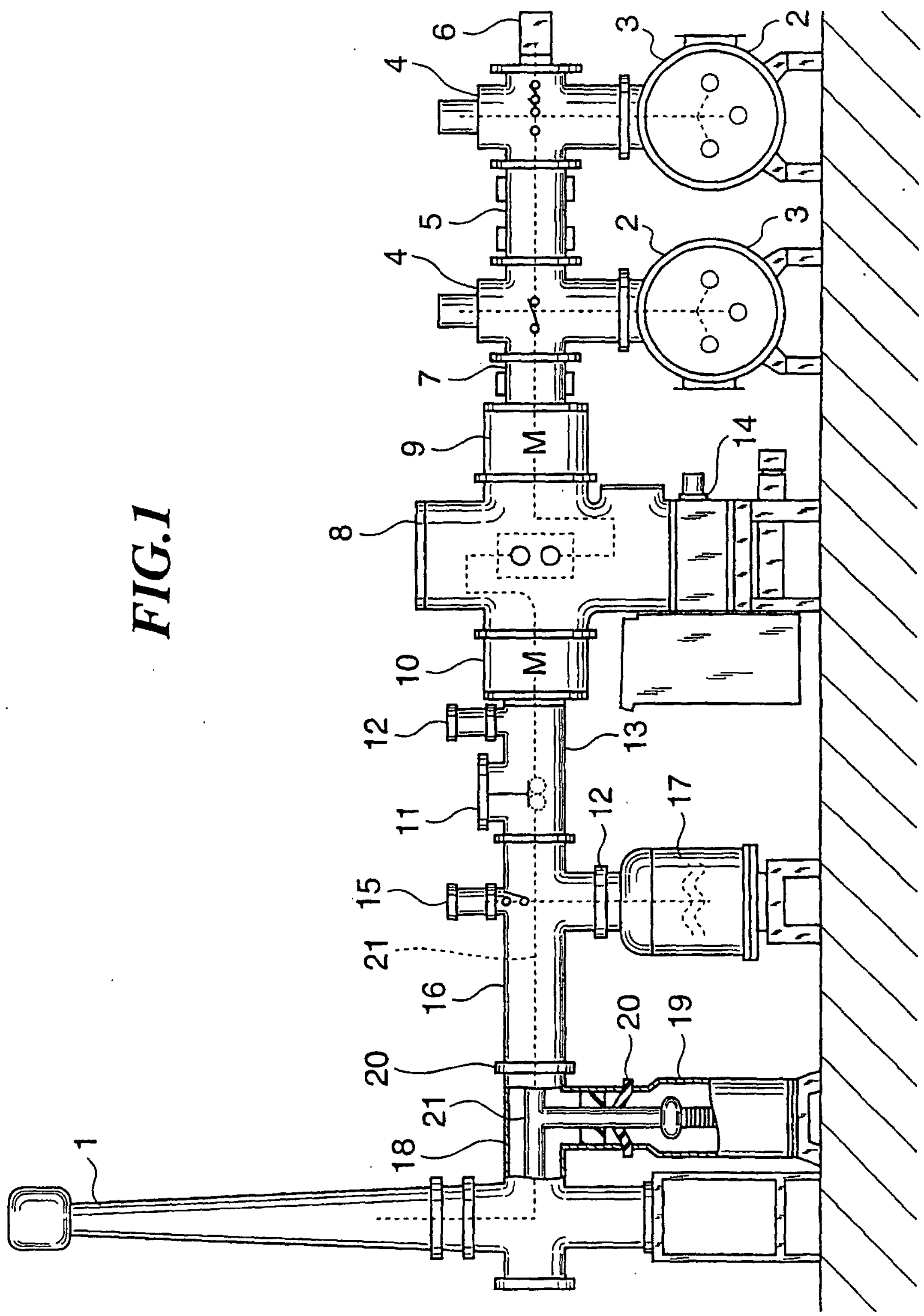


FIG.1

FIG.2

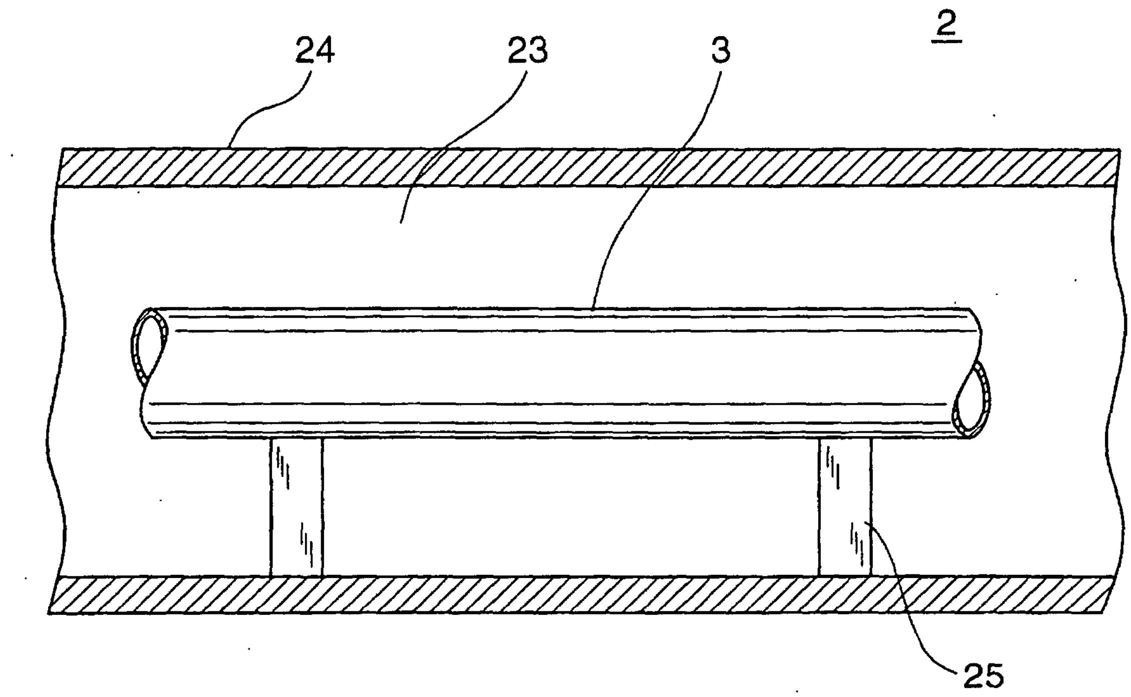

FIG.3

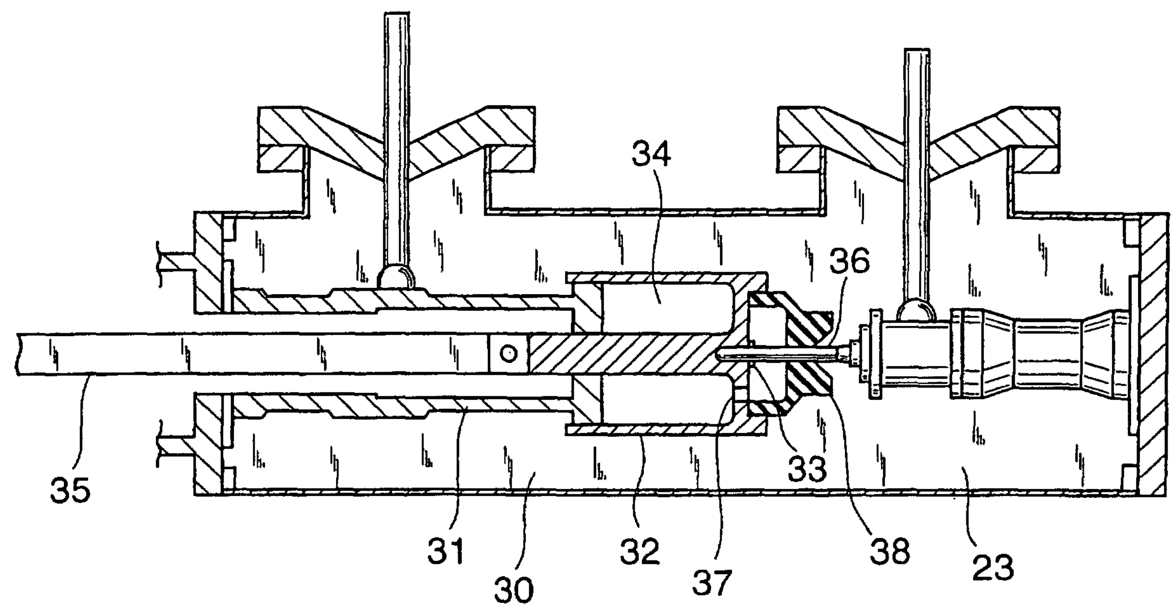

FIG.4

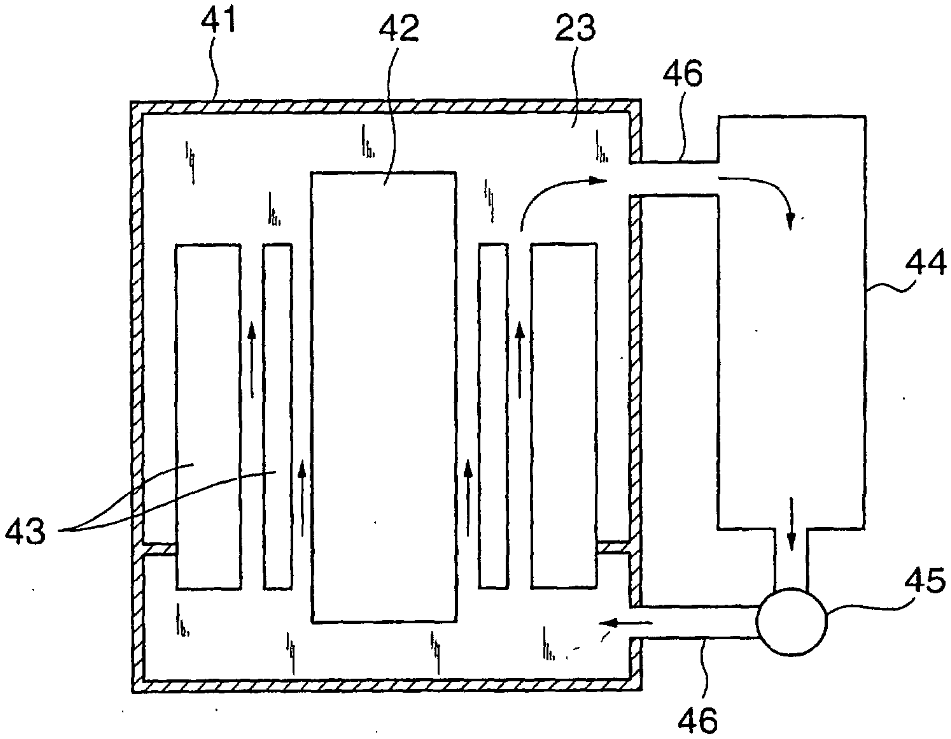


FIG.5

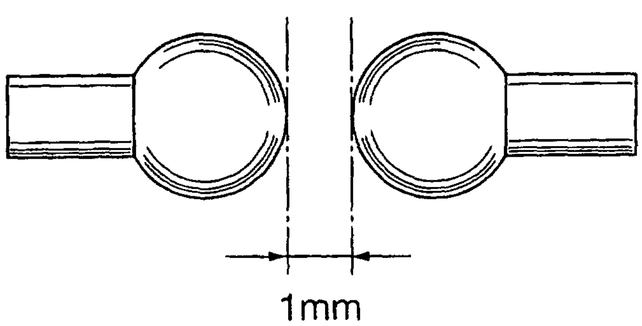

*FIG.6*

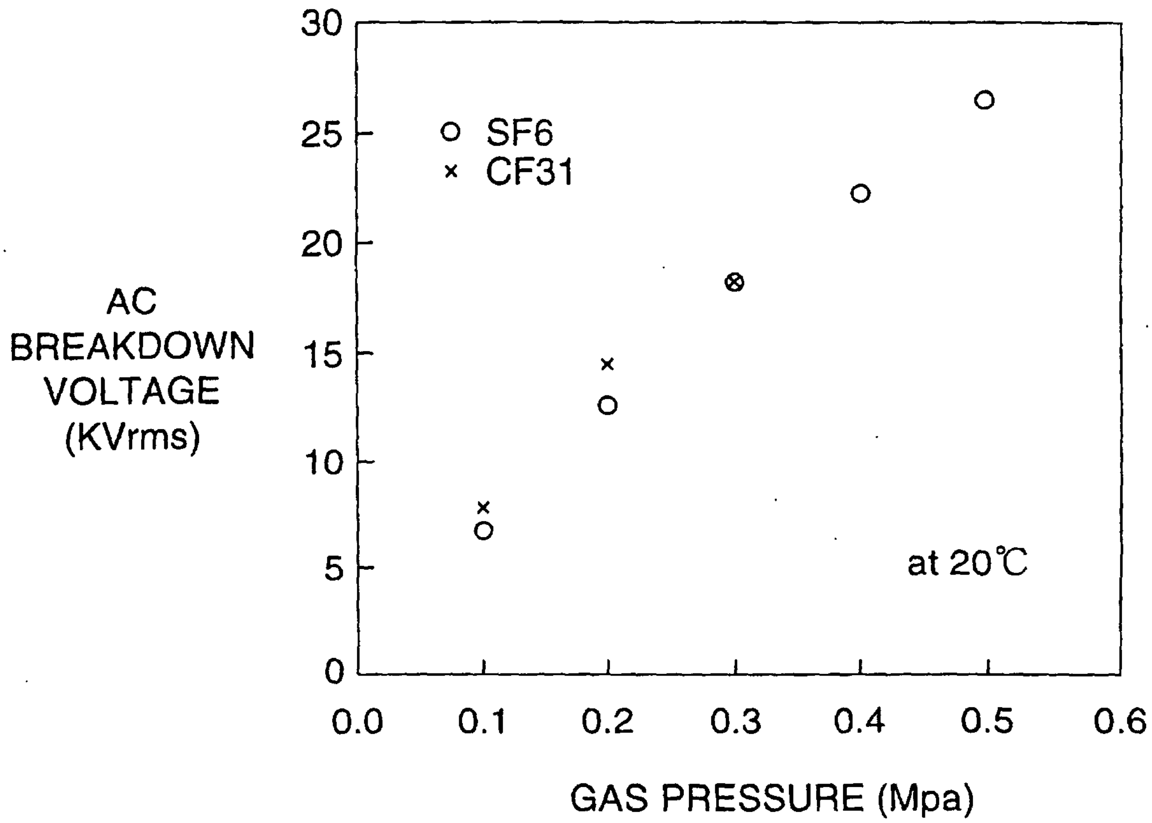
30
25
20
15
10
5
0
AC
BREAKDOWN
VOLTAGE
(KVrms)
SF6
CF31
at 20℃
0.0
0.1
0.2
0.3
0.4
0.5
0.6
GAS PRESSURE (Mpa)

*FIG.7*

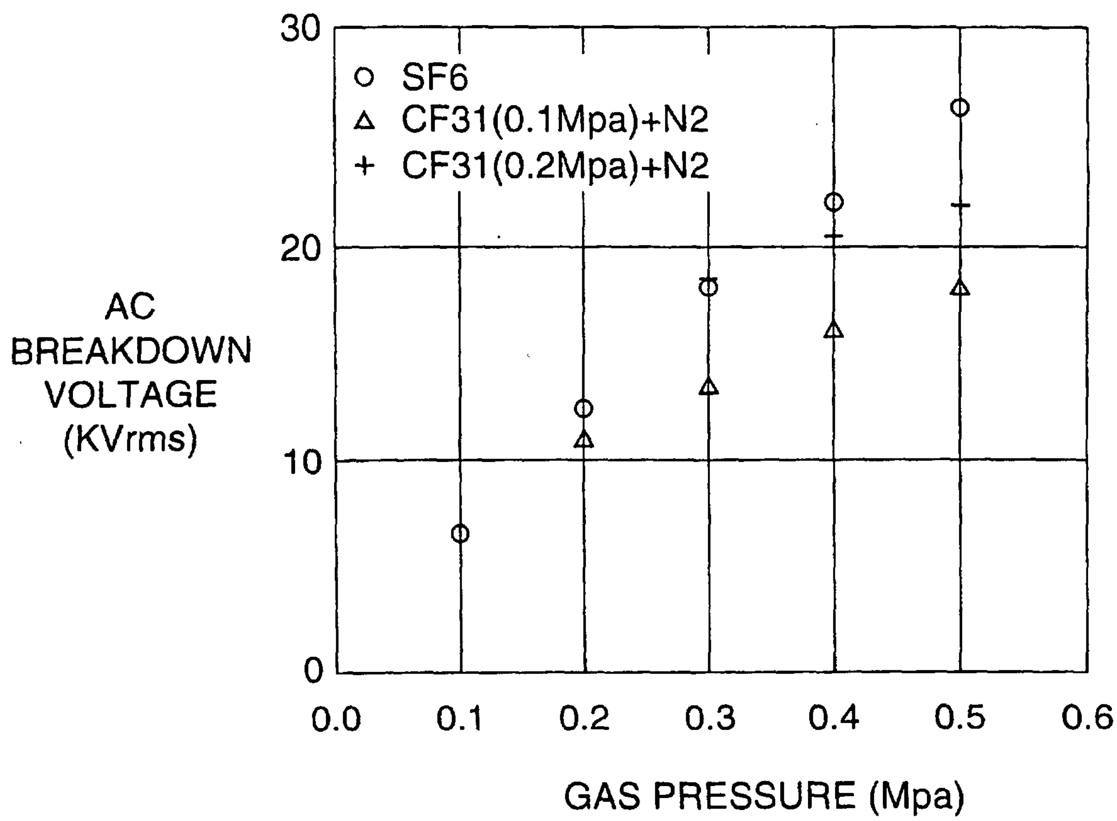
30
20
10
0
SF6
CF31(0.1Mpa)+N2
CF31(0.2Mpa)+N2
AC BREAKDOWN VOLTAGE (KVrms)
0.0
0.1
0.2
0.3
0.4
0.5
0.6
GAS PRESSURE (Mpa)

## INTERNATIONAL SEARCH REPORT

International application No. PCT/JP99/05942

**A. CLASSIFICATION OF SUBJECT MATTER**

Int.Cl$^7$ H01B 3/56, H02B13/06

According to International Patent Classification (IPC) or to both national classification and IPC

**B. FIELDS SEARCHED**

Minimum documentation searched (classification system followed by classification symbols)

Int.Cl$^7$ H01B 3/56, H01B 3/16, H02B13/06, C07C19/16

Documentation searched other than minimum documentation to the extent that such documents are included in the fields searched

Jitsuyo Shinan Koho 1926-1996 Toroku Jitsuyo Shinan Koho 1994-2000
Kokai Jitsuyo Shinan Koho 1971-2000 Jitsuyo Shinan Toroku Koho 1996-2000

Electronic data base consulted during the international search (name of data base and, where practicable, search terms used)

JOIS
DIALOG

**C. DOCUMENTS CONSIDERED TO BE RELEVANT**

| Category* | Citation of document, with indication, where appropriate, of the relevant passages | Relevant to claim No. |
|---|---|---|
| Y | WO, 94-20588, A (NIMITZ, Jonathan, S. & LANKFORD, Lance, H.), 15 September, 1994 (15.09.94), Claims; specification, page 1, line 1 to page 13, line 22 & US, 5444102, A & EP, 687287, A1 & US, 5562861, A & JP, 8-507524, A Claims; page 29, line 2 to page 38, line 21 & US, 5605647, A & US, 5611210, A & CN, 1122606, A & US, 5674451, A & US, 5685915, A & US, 5695688, A & US, 5716549, A | 1~4 |
| Y | JP, 132366, C2 (Tokyo Shibaura Denki K.K.), 04 November, 1939 (04.11.39) (Family: none) | 1~4 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 25 January, 2000 (25.01.00) | 01 February, 2000 (01.02.00) |
| Name and mailing address of the ISA/ Japanese Patent Office | Authorized officer |
| Facsimile No. | Telephone No. |

Form PCT/ISA/210 (second sheet) (July 1992)